(19) Europäisches Patentamt
European Patent Office
Office européen des brevets

(11) **EP 1 491 597 B1**

(12) **EUROPEAN PATENT SPECIFICATION**

(45) Date of publication and mention
of the grant of the patent:
**24.11.2010 Bulletin 2010/47**

(51) Int Cl.:
*C09D 11/00* (2006.01)

(21) Application number: **04014712.6**

(22) Date of filing: **23.06.2004**

(54) **Nonaqueous ink-jet ink**

Nichtwässrige Tintenstrahldruckertinte

Encre non-aqueuse pour imprimante à jet d'encre

(84) Designated Contracting States:
**DE FR GB**

(30) Priority: **27.06.2003 JP 2003184060**

(43) Date of publication of application:
**29.12.2004 Bulletin 2004/53**

(73) Proprietor: **Toyo Ink Mfg. Co. Ltd.**
**Tokyo 104-0031 (JP)**

(72) Inventors:
• **Aida, Seiji**
**Tokyo 104-0031 (JP)**
• **Fujimatsu, Shinya**
**Tokyo 104-0031 (JP)**
• **Nakano, Kaori**
**Tokyo 104-0031 (JP)**
• **Sato, Shinichi**
**Tokyo 104-0031 (JP)**

(74) Representative: **Koepe, Gerd L.**
**Koepe & Partner,**
**Patentanwälte,**
**Postfach 22 12 64**
**80502 München (DE)**

(56) References cited:
**EP-A- 1 016 694     EP-A- 1 266 943**
**EP-A- 1 298 165     WO-A- 02/055619**
**US-A- 4 605 441     US-A- 6 051 629**
**US-B1- 6 379 444**

• **DATABASE CHEMABS [Online] CHEMICAL ABSTRACTS SERVICE, COLUMBUS, OHIO, US; 8 May 2003 (2003-05-08), KOBAYASHI, YUICHI: "White ink composition showing stable delivery for ink-jet printing" XP002297677 retrieved from STN Database accession no. 2003:352214 -& JP 2003 128960 A (PENTEL CO., LTD., JAPAN) 8 May 2003 (2003-05-08)**
• **"EASTMAN EB ACETATE (ETHYLENE GLYCOL MONOBUTYL ETHER ACETATE) TECHNICAL DATA SHEE'"[Online] 13 October 2003 (2003-10-13), XP002297676 Retrieved from the Internet: URL:http://www.eastman.com/ ProductCatSQ/te chdatasheet.asp? productid=908&familyGMN=71 001079> [retrieved on 2004-09-23]**

EP 1 491 597 B1

**Description**

BACKGROUND OF THE INVENTION

1. Field of the Invention

The present invention relates to a nonaqueous ink-jet ink.

2. Description of the Related Art

Heretofore, there have often been employed ink-jet inks obtained by dissolving water-soluble dyes such as acid dyes, direct dyes and basic dyes in glycol solvents and water. These inks are disclosed in, for example, Japanese Patent Laid-open Nos. 53-61412, 54-89811 and 55-65269.

However, in order to obtain stability of the inks, the water-soluble dyes having a high solubility in water are generally used. Therefore, ink-jet printings are generally poor in water resistance, and they have a problem that blur of the dyes easily occurs at the printed part when water is spilled thereon.

In order to remove the disadvantage of the poor water resistance, it has been attempted to alter chemical structures of the dyes or to prepare strongly basic inks. This attempt is disclosed in, for example, Japanese Patent Laid-open No. 56-57862.

Furthermore, by suitably utilizing a reaction of a printing paper with the ink, it has also been attempted to improve the water resistance. This attempt has been described in Japanese Patent Laid-open Nos. 50-49004, 57-36692, 59-20696 and 59-146889.

These methods obtain remarkable effects for specific printing papers. However, they are not an all-purpose owing to the limitation of the printing papers. Moreover, in the case of using papers other than the specific papers, the inks containing the water-soluble dyes cannot give the sufficient water resistance to the printings.

In addition, inks having the excellent water resistance are obtained by dissolving or dispersing oil-soluble dyes in high-boiling solvents, or by dissolving oil-soluble dyes in volatile solvents. However, dyes are inferior to pigments in various properties such as light resistance. Therefore, inks containing pigments as colorants have been desired. Recently, some of the inks containing the pigments begin to be practically utilized which are obtained by dispersing the pigments in hardly volatile solvents such as liquid paraffins and aliphatic hydrocarbons or volatile solvents such as ethanol, methyl ethyl ketone and ethyl acetate. However, the hardly volatile solvents involve a problem that drying properties and fixing properties after printing are insufficient. Moreover, the volatile solvents involve a problem that nozzles are dried.

The document US-B 6,379,444 discloses an organic solvent-based piezo ink having (a) a particulate material; (b) a binder; (c) a plasticizer; (d) an organic solvent; (e) a fluorochemical surfactant; and (f) an antifoaming agent including an oil. Preferably, the particulate material is provided by an antifoaming silicone oil. Optionally, light and heat stabilizers are also included. Methods of making and using this ink are also disclosed.

Heretofore, an ink-jet ink having excellent water resistance, light resistance, jettability and fixing properties has been desired.

SUMMARY OF THE INVENTION

The present invention is directed to a nonaqueous ink-jet ink comprising at least two kinds of mixed organic solvents, a pigment and a resin, wherein all of the following mathematical formulae (1) (2) and (3) are satisfied, in which: weight ratios of the respective organic solvents in the total organic solvents are $x_1, x_2 ..... x_n$ wherein n represents an integer; vapor pressures (mmHg) of the respective organic solvents at 20°C are $y_1, y_2 ..... y_n$ wherein n represents an integer; $A = x_1y_1 + x_2y_2 + ..... + x_ny_n$; and $B = x_1/y_1 + x_2/y_2 + ..... + x_n/y_n$:

$$5 > A > 0.1 \qquad \text{mathematical formula (1)}$$

$$10 > B > 1 \qquad \text{mathematical formula (2)}$$

$$8 > (B - A) > 0.1 \qquad \text{mathematical formula (3)}$$

wherein the mixed organic solvents contain at least one kind of glycol acetates represented by the following general

formula (1):

$$CH_3CO(OR_1)_nOR_2 \qquad \text{general formula (1)}$$

Still another aspect of the present invention is directed to the above non-aqueous ink-jet ink which contains a dispersant.

According to embodiments of the present invention, there is provided an ink-jet ink which is excellent in water resistance, light resistance, jettability and fixing properties.

The present disclosure relates to subject matter contained in Japanese Patent Application No.2003-184060, filed on June, 27, 2003, the disclosure of which is expressly incorporated herein by reference in its entirety.

DETAILED DESCRIPTION OF THE INVENTION

A nonaqueous ink-jet ink according to one embodiment of the present invention comprises at least two kinds of mixed organic solvents, a pigment and a resin, and contains the respective organic solvents so as to satisfy all of the following mathematical formulae (1), (2) and (3), in which when the total amount of the mixed organic solvents is regarded as 1, mixing weight ratios of the respective organic solvents are x1, x2 ...... xn wherein n represents an integer; vapor pressures (mmHg) of the respective organic solvents at 20 ˚C are y1, y2 ...... yn wherein n represents an integer; A = x1y1 + x2y2 + ...... + xnyn, and B = x1/y1 + x2/y2 + ...... + xn/yn. It is further preferable that the mixed organic solvents satisfy the following mathematical formulae (4), (5) and (6):

$$5>A>0.1 \qquad \text{mathematical formula (1)}$$

$$10>B>1 \qquad \text{mathematical formula (2)}$$

$$8>(B-A)>0.1 \qquad \text{mathematical formula (3)}$$

$$3>A>0.2 \qquad \text{mathematical formula (4)}$$

$$7>B>1.5 \qquad \text{mathematical formula (5)}$$

$$6>(B-A)>0.2 \qquad \text{mathematical formula (6)}$$

In the present invention, the above are mixing rules to achieve both of: prevention of drying of inks in nozzles; and sufficient drying of the inks on substrates to be printed. They are important to impart suitableness as ink-jet inks. The numerical value A is referred to as a drying coefficient and the numerical value B to a moisturizing coefficient. The drying coefficient A is a measure of drying of inks on the substrates to be printed after printing. The moisturizing coefficient B is a measure of the prevention of drying of inks in nozzles. That is, when the drying coefficient A is too large, the drying of inks is too fast. Therefore, when a glossy sheet is used as the substrate to be printed, decrease of glossiness is invited owing to deterioration of leveling properties. Contrarily, when the drying coefficient A is too small, the inks do not dry and problems such as blocking may arise when the substrate to be printed is rolled up. Moreover, when the moisturizing coefficient B is too small, nozzle clogging may occur and hence the case is not suitable as ink-jet inks. When the moisturizing coefficient B is too large, there arise no problem in jettability of inks but a balance with the drying coefficient A is disrupted. Thereby, there arise problems of blur of inks and blocking. Preferred ranges for the balance are defined by the mathematical formulae (3) to (6). Inks wherein the difference between the moisturizing coefficient and the drying coefficient falls within the ranges of the mathematical formulae (3) to (6) exhibit more excellent suitableness as ink-jet inks.

As the mixing solvent for use in the present invention, it is most preferable to use at least one kind of glycol acetate organic solvent represented by the general formula above as a main solvent. Said at least one kind of glycol acetates represented by the general formula (1) comprises ethylene glycol monobutyl ether acetate. Examples of the glycol ether acetate solvent usable include further ethylene glycol monomethyl ether acetate, ethylene glycol monoethyl ether acetate, ethylene glycol monopropyl ether acetate, ethylene glycol monobutyl ether acetate, diethylene glycol monoethyl ether acetate, diethylene glycol monobutyl ether acetate, propylene glycol monomethyl ether acetate, propylene glycol monoethyl ether acetate, dipropylene glycol monomethyl ether acetate, and the like.

Moreover, the organic solvent usable as the mixing solvent other than the general formula (1) is not particularly limited unless the solvent corrodes a printer head or dissolves a pigment. Examples of usable organic solvents include: alcohols such as methyl alcohol, ethyl alcohol, n-propyl alcohol, isopropyl alcohol and n-butyl alcohol; ketones such as acetone, methyl ethyl ketone, methyl n-propyl ketone, methyl isopropyl ketone, methyl n-butyl ketone, methyl isobutyl ketone, methyl n-amyl ketone, methyl isoamyl ketone, diethyl ketone, ethyl n-propyl ketone, ethyl isopropyl ketone, ethyl n-butyl ketone, ethyl isobutyl ketone, di-n-propyl ketone, diisobutyl ketone, cyclohexanone, methylcyclohexanone and isophorone; esters such as methyl acetate, ethyl acetate, n-propyl acetate, isopropyl acetate, n-butyl acetate, isobutyl acetate, hexyl acetate, octyl acetate, methyl lactate, propyl lactate and butyl lactate; glycols such as ethylene glycol, diethylene glycol, triethylene grlycol, propylene glycol, and dipropylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, dipropylene glycol monomethyl ether, tripropylene glycol monomethyl ether, diethylene glycol dimethyl ether and diethylene glycol diethyl ether; saturated hydrocarbons such as n-hexane, isohexane, n-nonane, isononane, dodecane and isododecane; unsaturated hydrocarbons such as 1-hexene, 1-heptene and 1-octene; cyclic saturated hydrocarbons such as cyclohexane, cycloheptane, cyclooctane, cyclodecane and decalin; cyclic unsaturated hydrocarbons such as cyclohexene, cycloheptene, cyclooctene, 1,1,3,5,7-cyclooctatetraene; and cyclododecene; and aromatic hydrocarbons such as benzene, toluene and xylene.

The mixed solvent is preferably contained in an amount of 80-97 % by weight in the ink-jet ink.

The pigment for use in the present invention may be selected from the various pigments for printing inks, paints and the like. Examples of such pigments shown as Color Indexes include Pigment Black 7, Pigment Blue 15, 15:1, 15:3, 15:4, 15:6, 60, Pigment Green 7, 36, Pigment Red 9, 48, 49, 52, 53, 57, 97, 122, 149, 168, 177, 178, 179, 206, 207, 209, 242, 254, 255, Pigment Violet 19, 23, 29, 30, 37, 40, 50, Pigment Yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, Pigment Orange 36, 43, 51, 55, 59, 61, 71, 74, and the like. Moreover, with regard to carbon black, any carbon blacks such as neutral, acidic and basic ones can be used.

The pigment is preferably contained in the range of 2 to 10 % by weight in the ink-jet ink.

In the present invention, a resin is added in order to impart fixing properties to the substrate to be printed. Examples of the usable resin include acrylic resins, styrene-acrylic resins, styrene-maleic acid resins, rosin resins, rosin ester resins, ethylene-vinyl acetate resins, petroleum resins, chroman inden resins, terpene phenol resin, phenol resins, urethane resins, melamine resins, urea resins, epoxy resins, cellulose resins, vinyl chloride/vinyl acetate resins, xylene resins, alkyd resins, aliphatic hydrocarbon resins, butyral resins, maleic acid resins, fumaric acid reins, and the like. Specific examples of the resins include: Super Ester 75, Ester Gum HP, Malkyd 33 manufactured by Arakawa Chemical Industries, Ltd.; YS Polystar T80 manufactured by Yasuhara Chemical Co., Ltd.; Hiretts HRT 200X manufactured by Mitsui Chemicals, Inc.; Joncryl 586 manufactured by Johnson Polymer Corporation; UCAR Solution Vinyl Resins VYHD, VYHH, VMCA manufactured by Dow Chemical Company; and the like.

The resin is preferably contained in the range of 1 to 13 % by weight, and more preferably 3 to 8 % by weight in the ink-jet ink.

In the present invention, a dispersant can be used in order to improve storage stability of the ink. As the dispersant, use can be made of, for example, carboxylic esters containing a hydroxyl group, salts of long-chain polyaminoamides with high molecular weight acid esters, salts of high molecular weight polycarboxylic acids, salts of long-chain polyaminoamides with polar acid esters, high molecular weight unsaturated acid esters, high molecular weight copolymers, modified polyurethanes, modified polyacrylates, polyether ester-type anion activators, naphthalenesulfonic acid formalin condensate salts, aromatic sulfonic acid formalin condensate salts, polyoxyethylenealkyl phosphate esters, polyoxyethylene nonylphenyl ethers, stearylamine acetate, and the like.

Specific examples of the dispersant include "Anti-Terra-U (polyaminoamide phosphate salt)", "Anti-Terra-203/204 (high molecular weight polycarboxylate salts)", "Disperbyk-101 (polyaminoamide phosphate salt and acid ester), 107 (carboxylate ester containing hydroxyl group), 110, 111 (copolymer containing acid group), 130 (polyamide), 161, 162, 163, 164, 165, 166, 170 (high molecular weight copolymers)", "400", "Bykumen" (high molecular weight unsaturated acid ester)", "BYK-P104, P105 (high molecular weight unsaturated polycarboxylic acids)", "P104S, 240S (high molecular weight unsaturated acid polycarboxylic acid and silicon-based one)", and "Lactimon (long-chain amine and unsaturated acid polycarboxylic acid and silicon)" manufactured by BYK Chemie.

In addition, examples of the dispersant include: "Efka 44, 46, 47, 48, 49, 54, 63, 64, 65, 66, 71, 701, 764, 766", "Efka Polymer 100 (modified polyacrylate), 150 (aliphatic modified polymer), 400, 401, 402, 403, 450, 451, 452, 453 (modified polyacrylates), 745 (copper phthalocyanine-based)" manufactured by Efka CHEMICALS; "Flowlen TG-710 (urethane oligomer), "Flownon SH-290, SP-1000", "Polyflow No. 50E, No. 300 (acrylic copolymers)" manufactured by Kyoeisha Chemical Co., Ltd.; "Disparlon KS-860, 873SN, 874 (polymer dispersants), #2150 (aliphatic polybasic carboxylic acid), #7004 (polyether ester-type) manufactured by Kusumoto Chemicals Ltd..

Furthermore, examples of the dispersant include: "Demor RN, N (naphthalenesulfonic acid formalin condensate sodium salts), MS, C, SN-B (aromatic sulfonic acid formalin condensate sodium salts), EP", "Homogenol L-18 (polycarboxylic acid-type polymer), "Emulgen 920, 930, 931, 935, 950, 985 (polyoxyethylene nonylphenyl ethers), "Acetamine 24 (coconut amine acetate), 86 (stearylamine acetate)" manufactured by Kao Corporation; "Solsperse 5000 (phthalocyanine ammonium salt-based), 13940 (polyester amine-based), 17000 (aliphatic amine-based), 24000" manufactured by Avecia Ltd,; and "Nikkol T106 (polyoxyethylene sorbitan monooleate), MYS-IEX (polyoxyethylene monostearate), Hexagline 4-0 (hexaglyceryl tetraoleate)" manufactured by Nikko Chemicals Co., Ltd..

The dispersant is preferably incorporated in an ink in an amount of 0.1 to 10 % by weight in consideration of dispersion stability of the pigment.

In the non-aqueous ink-jet ink of the present invention, depending on the application of printings, various additives such as a plasticizer, a surface regulator, a UV inhibitor, a light stabilizer and an antioxidant can be incorporated.

The nonaqueous ink-jet ink of the present invention is produced by first dispersing a pigment in a single organic solvent or mixed organic solvents with the aid of a resin or dispersant by means of a paint shaker, a sand mill, a roller mill, a media-less dispersing machine or the like, and then diluting the resulting pigment dispersion with an organic solvent in accordance with the mixing rules of the present invention.

EXAMPLES

The following will specifically describe the present invention with reference to examples, but the present invention is not particularly limited to the examples. It is to be noted that "part(s)" in the examples represents "part(s) by weight".

First, a pigment dispersion was prepared in accordance with the following formulation. The dispersion was obtained by adding a pigment and a dispersant to an organic solvent, stirring the solution by means of a highspeed mixer until it was homogeneous, and then dispersing the prepared mill base in a horizontal sand mill for about 2 hours.
Regal 400R (carbon black pigment manufactured by Cabot Corporation) 40.0 parts;
Disperbyk 130 (pigment dispersant manufactured by BYK Chemie) 13.0 parts; Joncryl 586 (styrene-acrylic resin manufactured by Johnson Polymer Corporation) 10.0 parts;
Ethylene glycol monobutyl ether acetate (vapor pressure: 0.30 mmHg [$\triangleq$ 40 Pa]) 37.0 parts.

(Example 1)

The resulting pigment dispersion was diluted in accordance with the following formulation to prepare an ink-jet ink. When the ink was applied to the mathematical formulae of the present invention, it was found that A = 0.61, B = 5.33, and B-A = 4.75.
Pigment dispersion 12.5 parts;
Propylene glycol monomethyl ether acetate (vapor pressure: 3.75 mmHg [$\triangleq$ 500.00 Pa]) 10.0 parts;
Ethylene glycol monobutyl ether acetate (vapor pressure: 0.30 mmHg) 67.5 parts;
Diethylene glycol monoethyl ether acetate (vapor pressure: 0.05 mmHg) [$\triangleq$ 6.67 Pa] 10.0 parts;

(Example 2)

The resulting pigment dispersion was diluted in accordance with the following formulation to prepare an ink-jet ink. When the ink was applied to the mathematical formulae of the present invention, it was found that A = 1.21, B = 2.74, and B-A = 1.53.
Pigment dispersion 12.5 parts;
Hexyl acetate (vapor pressure: 3.8 mmHg [$\triangleq$ 506.6 Pa]) 15.0 parts;
Propyl lactate (vapor pressure: 1.0 mmHg [$\triangleq$ 133.3 Pa]) 50.0 parts;
Ethylene glycol monobutyl ether acetate (vapor pressure: 0.30 mmHg) 7.5 parts;
Dipropylene glycol monomethyl ether (vapor pressure: 0.1 mmHg [$\triangleq$ 13.3 Pa]) 15.0 parts

(Example 3)

The resulting pigment dispersion was diluted in accordance with the following formulation to prepare an ink-jet ink. When the ink was applied to the mathematical formulae of the present invention, it was found that A = 1.83, B = 2.18, and B-A = 0.35.
Pigment dispersion 12.5 parts ;
Diethylene glycol dimethyl ether (vapor pressure: 2.47 mmHg) [$\triangleq$ 329.31 Pa] 55.0 parts;
Diethylene glycol diethyl ether (vapor pressure: 0.6 mmHg [$\triangleq$ 80.0 Pa]) 15.0 parts;
Cyclohexanone (vapor pressure: 3,75 mmHg [$\triangleq$ 500 Pa]) 4.0 parts;
Dipropylene glycol monomethyl ether (vapor pressure: 0.1 mmHg) 13.5 parts

(Example 4)

The resulting pigment dispersion was diluted in accordance with the following formulation to prepare an ink-jet ink. When the ink was applied to the mathematical formulae of the present invention, it was found that A = 0.42, B = 5.79, and B-A = 5.37.
Pigment dispersion 12.5 parts;
Propyl lactate (vapor pressure: 1.0 mmHg) 25.0 parts;
Ethylene glycol monobutyl ether acetate (vapor pressure: 0.30 mmHg) 47.5 parts;
Diethylene glycol monoethyl ether acetate (vapor pressure: 0.05 mmHg) 15.0 parts;

(Example 5)

The resulting pigment dispersion was diluted in accordance with the following formulation to prepare an ink-jet ink. When the ink was applied to the mathematical formulae of the present invention, it was found that A = 1.56, B = 7.58, and B-A = 6.02.
Pigment dispersion 12.5 parts;
Butyl acetate (vapor pressure: 15.0 mmHg [1999.8 Pa]) 5.0 parts;
Cyclohexanone (vapor pressure: 3.75 mmHg) 35.0 parts;
Ethylene glycol monobutyl ether acetate (vapor pressure: 0.30 mmHg) 31.5 parts;
Tripropylene glycol monomethyl ether (vapor pressure: 0.03 mmHg [$\triangleq$ 4.00 Pa]) 16.0 parts;

(Comparative Example 1)

The resulting pigment dispersion was diluted in accordance with the following formulation to prepare an ink-jet ink. When the ink was applied to the mathematical formulae of the present invention, it was found that A = 2.24, B = 1.27, and B-A = - 0.97.
Pigment dispersion 12.5 parts;
Propylene glycol monomethyl ether acetate (vapor pressure: 3.75 mmHg) 40.0 parts;
Cyclohexanone (vapor pressure: 3.75 mmHg) 30.0 parts;
Ethylene glycol monobutyl ether acetate (vapor pressure: 0.30 mmHg) 17.5 parts;

(Comparative Example 2)

The resulting pigment dispersion was diluted in accordance with the following formulation to prepare an ink-jet ink. When the ink was applied to the mathematical formulae of the present invention, it was found that A = 1.25, B = 12, and B-A = 10.75.
Pigment dispersion 12.5 parts;
Propylene glycol monomethyl ether acetate (vapor pressure: 3.75 mmHg) 20.0 parts;
Cyclohexanone (vapor pressure: 3.75 mmHg) 20.0 parts;
Ethylene glycol monobutyl ether acetate (vapor pressure: 0.30 mmHg) 17.5 parts;
Tripropylene glycol monomethyl ether (vapor pressure: 0.03 mmHg) 30.0 parts.
The ink-jet inks obtained in Examples 1 to 5 and Comparative Examples 1 and 2 were evaluated on the following items: (1) viscosity, (2) storage stability, (3) jettability, (4) drying properties, (5) fixing properties, and (6) water resistance. Measuring methods of them are shown in the following.

(1) Viscosity: Each ink was prepared at 25 ˚C, and then measured on Viscomate VM-100A (an ultrasonic vibration viscometer manufactured by Yamaichi Electronics Co., Ltd.).

(2) Storage stability: Each ink was placed in a bottle made of polypropylene, and after stored in a constant-temperature chamber at 70 °C for 2 weeks for aging, viscosities of the ink were measured before and after the aging. The viscosity measurement at this time was carried out in the same manner as in the viscosity measurement of the above (1). When a rate of change of the viscosity was within +/-10%, the ink was ranked as O, and when the rate of change of the viscosity exceeded +/-10%, the ink was ranked as X.

(3) Jettabilitly: Each ink was printed on a poly vinyl chloride sheet MD5 (manufactured by Metamark) using IP-6500 (a large-sized ink-jet printer manufactured by Seiko I Infotech Inc.) over a length of 5 m continuously, and unprinted dots were observed. In terms of a percentage of the number of nozzles regarding the unprinted dots with respect to the total nozzles, the case of 0% was ranked as O, the case of 0% to 5% was ranked as △, and the case of more than 5% was ranked as X.

(4) Drying properties: Each ink was solid-printed on a poly vinyl chloride sheet MD5 (manufactured by Metamark) using IP-6500 (a large-sized ink-jet printer manufactured by Seiko I Infotech), and then evaluated on the basis of a time required until the ink no longer attached to a finger when the printed surface was touched with the finger. During the printing, a temperature of a heater equipped on the printer was set to 35 °C at the front of the printer head and at 40 °C at the back of the printer head (drying part after printing) for the evaluation. When the ink was not adhesive immediately after the printing, it was ranked as O; when the ink was adhesive immediately after the printing but no longer adhesive after 10 minutes, it was ranked as △; and when the ink was adhesive even after 10 minutes or more, it was ranked as X.

(5) Fixing properties: Each ink was solid-printed on a poly vinyl chloride sheet MD5 (manufactured by Metamark Ltd.) using IP-6500 (a large-sized ink-jet printer manufactured by Seiko I Infotech) and the printings were dried at 40 °C for 3 minutes. A rubbing test of 100 reciprocating motions on a rubbing tester (model AB301 manufactured by Tester Sangyo Co., Ltd.) with a test cloth (kanakin No. 3) under a load weight of 200 g was carried out on the printed surface of the poly vinyl chloride sheet. When the ink did not attach to the test cloth, it was ranked as O; when the ink slightly attached to the test cloth but the concentration of the printed surface of the poly vinyl chloride sheet hardly changed, it was ranked as △; and when the ink on the printed surface of the poly vinyl chloride sheet was almost peeled off, it was ranked as X.

(6) Water resistance: Each ink was solid-printed on a poly vinyl chloride sheet MD5 (manufactured by Metamark) using IP-6500 (a large-sized ink-jet printer manufactured by Seiko I Infotech) and the recorded articles were dried at 40 °C for 3 minutes. Thereafter, the poly vinyl chloride sheets were dipped in tap water. When a printed surface was rubbed with a finger and the ink did not peel off at all, the ink was ranked as O, and when the ink was peeled off, it was ranked as X.

The following Table 1 summarizes numerical values A, numerical values B, differences between the numerical values B and the numerical values A, which were calculated based on a vapor pressure of each of the ink-jet inks of Examples 1 to 5 and Comparative Examples 1 and 2, and results of evaluation.

**Table 1**

|  | Examples | | | | | Comparative Examples | |
|---|---|---|---|---|---|---|---|
|  | 1 | 2 | 3 | 4 | 5 | 1 | 2 |
| A | 0.65 | 1.22 | 1.84 | 0.45 | 2.47 | 3.06 | 1.87 |
| B | 4.81 | 2.65 | 2.09 | 5.41 | 7.40 | 0.87 | 12.21 |
| B - A | 4.16 | 1.44 | 0,25 | 4.96 | 4.93 | - 2.19 | 10.34 |
| Viscosity Stability (mPa . s) | 9.86 | 9.33 | 9.22 | 10.1 | 9.83 | 9.21 | 10.2 |
| Storage Stability | ○ | ○ | ○ | ○ | ○ | X | ○ |
| Jettability | ○ | ○ | ○ | ○ | ○ | X | ○ |
| Drying Properties | ○ | ○ | ○ | ○ | ○ | ○ | X |
| Fixing Properties | ○ | ○ | ○ | ○ | ○ | ○ | X |
| Water Resistance | ○ | ○ | ○ | ○ | ○ | ○ | X |

In Examples 1 to 5, the good results were obtained on all evaluation items of storage stability, jettability, drying properties, fixing properties, and water resistance. However, in Comparative Examples 1 and 2, a balance of drying properties was poor, and hence these inks were not suitable as ink-jet inks.

It should be understood that the foregoing relates to only a preferred embodiment of the invention, and it is intended to cover all changes and modifications of the examples of the invention herein chosen for the purposes of the disclosure.

**Claims**

1. A nonaqueous ink-jet ink comprising
   at least two kinds of mixed organic solvents,
   a pigment, and
   a resin,
   wherein all of the following mathematical formulae (1) (2) and (3) are satisfied in which: weight ratios of the respective organic solvents in the total organic solvents are $x_1$, $x_2$ ...... $x_n$ wherein n represents an integer; vapor pressures (mmHg) of the respective organic solvents at 20°C are $y_1$, $y_2$ ...... $y_n$ wherein n represents an integer; $A = x_1 y_1 + x_2 y_2 + ..... + x_n y_n$; and $B = x_1/y_1 + x_2/y_2 + ...... + x_n/y_n$.

$$5 > A > 0.1 \qquad \text{mathematical formula (1)}$$

$$10 > B > 1 \qquad \text{mathematical formula (2)}$$

$$8 > (B - A) > 0.1 \qquad \text{mathematical formula (3)}$$

   wherein the mixed organic solvents contain at least one kind of glycol acetates represented by the following general formula (1):

$$CH_3CO(OR_1)_nOR_2 \qquad \text{general formula (1)}$$

   wherein $R_1$ represents an ethylene group or a propylene group; $R_2$ represents an alkyl group having 1 to 4 carbon atoms; and n represents an integer of 1 to 3, said at least one kind of glycol acetates represented by the general formula (1) comprising ethylene glycol monobutyl ether acetate.

2. The non-aqueous ink-jet ink according to claim 1, further comprising a dispersant.

3. The non-aqueous ink-jet ink according to claim 1, wherein the following mathematical formulae (4), (5) and (6) are further satisfied.

$$3 > A > 0.2 \qquad \text{mathematical formula (4)}$$

$$7 > B > 1.5 \qquad \text{mathematical formula (5)}$$

$$6 > (B - A) > 0.2 \qquad \text{mathematical formula (6)}$$

4. The non-aqeous ink-jet ink according to claim 1, wherein the glycol acetate is selected from the group consisting of: ethylene glycol monomethyl ether acetate, ethylene glycol monoethyl ether acetate, ethylene glycol monopropyl ether acetate, ethylene glycol monobutyl ether acetate, diethylene glycol monoethyl ether acetate, diethylene glycol monobutyl ether acetate, propylene glycol monomethyl ether acetate, propylene glycol monoethyl ether acetate and dipropylene glycol monomethyl ether acetate.

5. The non-aqueous ink-jet ink according to claim 1, wherein the resin is selected from the group consisting of: acrylic resins, styrene-acrylic resins, styrene-maleic acid resins, rosin resins, rosin ester resins, ethylene-vinyl acetate resins, petroleum resins, chroman inden resins, terpene phenol resin, phenol resins, urethane resins, melamine resins, urea resins, epoxy resins, cellulose resins, vinyl chloride/vinyl acetate resins, xylene resins, alkyd resins, aliphatic hydrocarbon resins, butyral resins, maleic acid resins and fumaric acid resins.

6. The non-aqueous ink-jet ink according to claim 2, wherein the dispersant is selected from the group consisting of: carboxylic esters containing a hydroxyl group, salts of long-chain polyaminoamides with high molecular weight acid esters, salts of high molecular weight polycarboxylic acids, salts of long-chain polyaminoamides with polar acid esters, high molecular weight unsaturated acid esters, high molecular weight copolymers, modified polyurethanes, modified polyacrylates, polyether ester-type anion activators, naphthalenesulfonic acid formalin condensate salts, aromatic sulfonic acid formalin condensate salts, polyoxyethylenealkyl phosphate esters, polyoxyethylene nonylphenyl ethers and stearylamine acetate.

**Patentansprüche**

1. Nicht-wässrige Tintenstrahl-Tinte, umfassend

  - wenigstens zwei Arten von gemischten organischen Lösungsmitteln;
  - ein Pigment; und
  - ein Harz,

  worin allen der folgenden mathematischen Formeln (1), (2) und (3) genüge getan wird, worin: Gewichtsverhältnisse der jeweiligen organischen Lösungsmittel in der Gesamtmenge organischer Lösungsmittel $x_1$, $x_2$ ..... $x_n$ sind, worin n für eine ganze Zahl steht; Dampfdrücke (mmHg) der jeweiligen organischen Lösungsmittel bei 20 $^\circ$C $y_1$, $y_2$ .... $y_n$ sind, worin n eine ganze Zahl wiedergibt; $A = x_1y_1 + x_2y_2 + ..... + x_ny_n$; und $B = x_1/y_1 + x_2/y_2 + .... + x_n/y_n$;

  $$5 > A > 0{,}1 \qquad \text{mathematische Formel (1)}$$

  $$10 > B > 1 \qquad \text{mathematische Formel (2)}$$

  $$8 > (B\text{-}A) > 0{,}1 \qquad \text{mathematische Formel (3)}$$

  worin die gemischten organischen Lösungsmittel wenigstens eine Art Glycolacetate enthalten, die durch die folgende allgemeine Formel (1) wiedergegeben werden:

  $$CH_3CO(OR_1)_nOR_2 \qquad \text{allgemeine Formel (1)}$$

  worin $R_1$ für eine Ethylen-Gruppe oder eine Propylen-Gruppe steht; $R_2$ für eine Alkyl-Gruppe mit 1 bis 4 Kohlenstoff-Atomen steht; und n für eine ganze Zahl von 1 bis 3 steht, wobei die wenigstens eine Art von Glycolacetaten, die durch die allgemeine Formel (1) wiedergegeben werden, Ethylenglycolmonobutyletheracetat umfasst.

2. Nicht-wässrige Tintenstrahl-Tinte nach Anspruch 1, weiter umfassend ein Dispergiermittel.

3. Nicht-wässrige Tintenstrahl-Tinte nach Anspruch 1, worin die folgenden mathematischen Formeln (4), (5) und (6) weiter erfüllt werden:

$$3 > A > 0,2 \qquad \text{mathematische Formel (4)}$$

$$7 > B > 1,5 \qquad \text{mathematische Formel (5)}$$

$$6 > (B\text{-}A) > 0,2 \qquad \text{mathematische Formel (6).}$$

4. Nicht-wässrige Tintenstrahl-Tinte nach Anspruch 1, worin das Glycolacetat gewählt ist aus der Gruppe, die besteht aus Ethylenglycolmonomethyletheracetat, Ethylenglycolmonoethyletheracetat, Ethylenglycolmonopropyletheracetat, Ethylenglycolmonobutyletheracetat, Diethylenglycolmonoethyletheracetat, Diethylenglycolmonobutyletheracetat, Propylenglycolmonomethyletheracetat, Propylenglycolmonoethyletheracetat und Dipropylenglycolmonomethyletheracetat.

5. Nicht-wässrige Tintenstrahl-Tinte nach Anspruch 1, worin das Harz gewählt ist aus der Gruppe, die besteht aus Acrylharzen, Styrol-Acrylharzen, Styrolmaleinsäure-Harzen, Kolophonium-Harzen, Kolophoniumester-Harzen, EthylenVinylacetat-Harzen, Petroleum-Harzen, Chroman-Inden-Harzen, Terpen-Phenol-Harz, Phenol-Harzen, Urethan-Harzen, Melamin-Harzen, HarnstoffHarzen, Epoxy-Harzen, Cellulose-Harzen, Vinylchlorid/Vinylacetat-Harzen, Xylol-Harzen, Alkyd-Harzen, aliphatischen Kohlenwasserstoff-Harzen, Butyral-Harzen, Maleinsäure-Harzen und Fumarsäure-Harzen.

6. Nicht-wässrige Tintenstrahl-Tinte nach Anspruch 2, worin das Dispergiermittel gewählt ist aus der Gruppe, die besteht aus eine Hydroxyl-Gruppe enthaltenden Carbonsäureestern, Salzen von langkettigen Polyaminoamiden mit Säure-Estern hohen Molekulargewichts, Salzen von Polycarbonsäuren hohen Molekulargewichts, Salzen von langkettigen Polyaminoamiden mit polaren Säureestern, Estern ungesättigter Säuren mit hohem Molekulargewicht, Copolymeren mit hohem Molekulargewicht, modifizierten Polyurethanen, modifizierten Polyacrylaten, Anionen-Aktivatoren des Polyether-Ester-Typs, Naphthalinsulfonsäure-Formalin-Kondensat-Salzen, aromatischen Sulfonsäure-Formalin-Kondensat-Salzen, Polyoxyethylenalkyl-Phosphatestern, Polyoxyethylennonylphenylethern und Stearylaminacetat.

## Revendications

1. Encre non aqueuse pour jet d'encre comprenant :

   au moins deux types de solvants organiques mélangés,
   un pigment, et
   une résine,
   dans laquelle toutes les formules mathématiques suivantes (1) (2) et (3) sont satisfaites dans lesquelles : les rapports en poids des solvants organiques respectifs dans les solvants organiques totaux sont $x_1$, $x_2$ ...... $x_n$ dans lesquels n représente un nombre entier ; les pressions de vapeur (mm Hg) des solvants organiques respectifs à 20°C sont $y_1$, $y_2$ ...... $y_n$ dans lesquelles n représente un nombre entier; $A = x_1 y_1 + x_2 y_2 + ..... + x_n y_n$ ; et $B = x_1/y_1 + x_2/y_2 + ..... + x_n/y_n$

$$5 > A > 0,1 \qquad \text{formule mathématique (1)}$$

$$10 > B > 1 \qquad \text{formule mathématique (2)}$$

$$8 > (B - A) > 0,1 \qquad \text{formule mathématique (3)}$$

dans lesquelles le mélange des solvants organiques contiennent au moins un type d'acétates de glycol représentés par la formule générale suivante (1) :

$$CH_3CO(OR_1)_nOR_2 \qquad \text{formule générale (1)}$$

dans laquelle $R_1$ représente un groupe éthylène ou un groupe propylène ; $R_2$ représente un groupe alkyle ayant 1 à 4 atome(s) de carbone ; et n représente un nombre entier d'une valeur de 1 à 3, ledit au moins un type d'acétates de glycol représentés par la formule générale (1) comprenant de l'éther acétate monobutylique d'éthylène glycol.

2. Encre non aqueuse pour jet d'encre selon la revendication 1, comprenant en outre un agent de dispersion.

3. Encre non aqueuse pour jet d'encre selon la revendication 1, dans laquelle les formules mathématiques suivantes (4), (5) et (6) sont en outre satisfaites

$$3 > A > 0,2 \qquad \text{formule mathématique (4)}$$

$$7 > B > 1,5 \qquad \text{formule mathématique (5)}$$

$$6 > (B - A) > 0,2 \qquad \text{formule mathématique (6)}.$$

4. Encre non aqueuse pour jet d'encre selon la revendication 1, dans laquelle l'acétate de glycol est choisi parmi le groupe constitué de : l'éther acétate monométhylique d'éthylène glycol, l'éther acétate monoéthylique d'éthylène glycol, l'éther acétate monopropylique d'éthylène glycol, l'éther acétate monobutylique d'éthylène glycol, l'éther acétate monoéthylique de diéthylène glycol, l'éther acétate monobutylique de diéthylène glycol, l'éther acétate monométhylique de propylène glycol, l'éther acétate monoéthylique de propylène glycol et l'éther acétate monométhylique de dipropylène glycol.

5. Encre non aqueuse pour jet d'encre selon la revendication 1, dans laquelle la résine est choisie parmi le groupe constitué de : résines acryliques, résines styrène-acryliques, résines styrène-acide maléique, résines de colophane, résines de colophane ester, résines d'éthylène-acétate de vinyle, résines de pétrole, résines de chromane indène, résine terpène phénol, résines phénoliques, résines uréthane, résines mélamine, résines urée, résines époxy, résines de cellulose, résines de chlorure de vinyle/acétate de vinyle, résines de xylène, résines alkydes, résines d'hydrocarbure aliphatique, résines de butyral, résines d'acide maléique et résines d'acide fumarique.

6. Encre non aqueuse pour jet d'encre selon la revendication 2, dans laquelle l'agent de dispersion est choisi parmi le groupe constitué : des esters carboxyliques contenant un groupe hydroxyle, des sels de polyaminoamides à longue chaîne avec des esters d'acide de poids moléculaire élevé, des sels de poly(acides carboxyliques) de poids moléculaire élevé, des sels de polyaminoamides à longue chaîne avec des esters d'acide polaire, des esters d'acide insaturé de poids moléculaire élevé, des copolymères de poids moléculaire élevé, des polyuréthanes modifiés, des polyacrylates modifiés, des activateurs anions du type polyéther ester, des sels condensats d'acide naphtalène sulfonique-formaldéhyde, des sels condensats d'acide sulfonique aromatique-formaldéhyde, des phosphate esters de polyoxyéthylènealkyle, des nonylphényl éthers de polyoxyéthylène et de l'acétate de stéarylamine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53061412 A
- JP 54089811 A
- JP 55065269 A
- JP 56057862 A
- JP 50049004 A
- JP 57036692 A
- JP 59020696 A
- JP 59146889 A
- US 6379444 B
- JP 2003184060 A